# EUROPÄISCHE PATENTANMELDUNG

(11) **EP 4 794 149 A1**
(43) Veröffentlichungstag der Anmeldung: **19.08.2026**
(21) Anmeldenummer: 25157600.5
(22) Anmeldetag: 13.02.2025
(51) Int. Cl.: H02H 3/087, H02H 3/18, H02H 11/00

(54) **POLARITÄTSSCHUTZSCHALTUNG, AUTOMATISIERUNGSKOMPONENTE UND VERWENDUNG DER POLARITÄTSSCHUTZSCHALTUNG**

(71) Anmelder: Siemens Aktiengesellschaft, 80333 München (DE)
(72) Erfinder: Kandlin, Sergej, 76185 Karlsruhe (DE)
(74) Vertreter: Siemens Patent Attorneys

(57) **Zusammenfassung**

Die Erfindung betrifft eine Polaritätsschutzschaltung (1) umfassend:
- einen positiven Versorgungsspannungspfad (V+) mit einer Eingangsseite (P24V) für den Anschluss einer positiven Gleichspannung (+24V) und einer Ausgangsseite (L+) für die Weitergabe der Gleichspannung an eine elektronische Baugruppe,
- einen negativen Versorgungsspannungspfad (V-) mit einer Eingangsseite (N24V) für den Anschluss einer negativen Gleichspannung (-24V) und einer Ausgangsseite (L-) für die Weitergabe der negativen Gleichspannung an die elektronische Baugruppe (MB),
- eine erste Schutzkomponente (M1), angeordnet im positiven Versorgungsspannungspfad (V+, und ausgestaltet, um Strom in einer unbeabsichtigten Richtung bei einer Polaritätsumkehr zu blockieren,
- eine zweite Schutzkomponente (M2), angeordnet im negativen Versorgungsspannungspfad (V-) und ausgestaltet, um Strom in einer unbeabsichtigten Richtung bei einer Polaritätsumkehr zu blockieren,
- eine Überstromschutzschaltung (OCP), angeordnet im negativen Versorgungsspannungspfad (V-) hinter der zweiten Schutzkomponente (M2), und ausgestaltet den negativen Versorgungsspannungspfad (V-) im Falle einer Überstrombedingung zu unterbrechen.

## Beschreibung

Die vorliegende Erfindung betrifft eine Vorrichtung zum Schutz einer nicht-isolierten Stromversorgung gegen direkte und indirekte Fehlverdrahtungen in einer industriellen Gleichspannungsumgebung mit weitem Eingangsspannungsbereich.

Die EP 2 360 807 A1 beschreibt eine Eingangsschaltung mit Verpol- und Kurzschlussschutz für eine DC-Stromversorgung. In einem 9V - 48V (nominal 24V) Industrie-System können mehrere Geräte parallel an ein Netzteil angeschlossen werden. Unbeabsichtigte Verdrahtungsfehler, wie z.B. eine Verpolung, können die Hardware beschädigen. Es gibt vier typische Szenarien für anomale Verdrahtungen in einem nicht-isolierten System.
1. Direkte Polaritätsumkehrung: Hierbei werden die positive und negative Versorgungsspannung vertauscht angeschlossen.
2. Indirekte Polaritätsumkehrung: Diese wird durch Fehlverdrahtung an einem anderen Gerät im System verursacht und kann zu unerwarteten Stromflüssen führen. Dabei ist beispielsweise der negative Versorgungsweg an eine Schutz- oder Funktionalerde angeschlossen und das positive Versorgungskabel ist an einem Nachbargerät vertauscht worden.
3. Indirekte Polaritätsumkehrung: Der positive Versorgungszweig ist an Schutz- oder Funktionalerde am Nachbargerät angeschlossen und positives und negatives Versorgungskabel sind geräteseitig vertauscht angeschlossen.
4. Kurzschluss gegen Erdpotential: Die positive Versorgungsleitung wird unbeabsichtigt mit dem Erdpotential verbunden. Zwar ist der Kurzschluss von P24V oder N24V gegen PE kein Fehler. Häufig wird sogar N24V in Anlagen geerdet, aber auch eine hochohmige Verbindung zwischen Gehäuse und PE kann bei nicht isolierten DC-Netzteilen zu Fehlern führen.

Diese vier Szenarien stellen die hauptsächlichen Verdrahtungsfehler dar, gegen die die beschriebene Polaritätsschutzschaltung entwickelt wurde, um elektronische Baugruppen in industriellen Gleichstromumgebungen zu schützen.

Verdrahtungsprobleme bei einem Gerät in der Anlage können auch Defekte bei einem anderen korrekt angeschlossenen Gerät verursachen, bedingt durch indirekte Fehler.

Die derzeit implementierten Verpolungsschutzschaltungen in nicht-isolierten DC-Netzteilen schützen meistens nur den positiven Versorgungsspannungspfad oder den negativen Versorgungsspannungspfad.

Es ist die Aufgabe der vorliegenden Erfindung eine Polaritätsschutzschaltung bereitzustellen, welche es erlaubt auch mehrere Geräte parallel an eine DC-Versorgung sicher anzuschließen.

Gelöst wird die Aufgabe durch eine Polaritätsschutzschaltung mit einem positiven und einem negativen Versorgungsspannungspfad. Im positiven Pfad ist eine erste Schutzkomponente und im negativen Pfad eine zweite Schutzkomponente angeordnet. Beide Schutzkomponenten sind dazu ausgelegt, Ströme in unbeabsichtigter Richtung bei einer Polaritätsumkehr zu blockieren. Zusätzlich beinhaltet die Schaltung eine Überstromschutzschaltung im negativen Pfad, die den Stromfluss bei Überstrombedingungen unterbricht.

Die Vorrichtung kann in einer Automatisierungskomponente mit einer elektronischen Baugruppe eingesetzt werden. Die Polaritätsschutzschaltung dient dabei zur Absicherung der Gleichstromversorgung der elektronischen Baugruppe gegen Fehlverdrahtungen und Überstromzustände.

### TECHNISCHER HINTERGRUND

In industriellen Umgebungen werden häufig mehrere Geräte und/oder Automatisierungskomponenten parallel an eine gemeinsame Stromversorgung angeschlossen. Diese Konfiguration bietet Vorteile hinsichtlich der Effizienz und Flexibilität, bringt jedoch auch potenzielle Risiken mit sich, insbesondere bei nicht-isolierten Stromversorgungen.

Ein wesentliches Problem in solchen Umgebungen ist die Gefahr von Verdrahtungsfehlern. Diese können direkt an einem Gerät auftreten oder indirekt durch fehlerhafte Verdrahtung an anderen angeschlossenen Geräten verursacht werden. Letzteres ist besonders tückisch, da ein korrekt angeschlossenes Gerät durch Fehler in der Verdrahtung eines anderen Geräts beeinträchtigt werden kann.

In nicht-isolierten Systemen können typischerweise vier spezifische Arten von abnormalen Verdrahtungsszenarien auftreten. Diese Szenarien umfassen verschiedene Formen von Polaritätsumkehrungen und Kurzschlüssen, die zu Schäden an den angeschlossenen Geräten führen können.

Die Verwendung von Polaritätsschutzschaltungen in industriellen Umgebungen mit Gleichstromversorgungen im Bereich von 9V bis 48V ist daher von großer Bedeutung. Diese Schaltungen sollen nicht nur gegen direkte Verdrahtungsfehler am jeweiligen Gerät schützen, sondern auch gegen indirekte Fehlerströme, die durch Verdrahtungsfehler an anderen angeschlossenen Geräten entstehen können.

Ein umfassender Schutz gegen alle vier spezifischen Arten von abnormalen Verdrahtungsszenarien in einem nicht-isolierten System kann mit der Erfindung nun bereitgestellt werden. Die Lösung bietet einen vollständigen Schutz sowohl gegen direkte als auch indirekte Fehlerströme bietet und erhöht die Zuverlässigkeit und Sicherheit in industriellen Anwendungen erheblich.

Mit großem Vorteil wird die Polaritätsschutzschaltung für nicht-isolierte Stromversorgungen in industriellen Umgebungen eingesetzt.

Isolierte Stromversorgungen sind elektrische Versorgungssysteme, bei denen der Ausgangskreis vom Eingangskreis galvanisch getrennt ist. Diese Trennung wird typischerweise durch folgende Merkmale erreicht:
1. Transformator: Ein Transformator wird verwendet, um die elektrische Energie vom Primärzum Sekundärkreis zu übertragen, ohne dass eine direkte elektrische Verbindung besteht.
2. Optokoppler: In einigen Designs werden Optokoppler eingesetzt, um Steuersignale zwischen den getrennten Kreisen zu übertragen.
3. Isolationsbarriere: Es gibt eine physische Barriere zwischen Ein- und Ausgangsseite, oft aus Isolationsmaterialien wie Kunststoff oder Keramik.

Vorteile isolierter Stromversorgungen:
- Erhöhte Sicherheit: Sie bieten Schutz vor elektrischen Schlägen und Überspannungen.
- Störungsunterdrückung: Sie können Störungen und Rauschen zwischen den Kreisen reduzieren.
- Potentialunterschied: Ermöglichen den Betrieb von Geräten mit unterschiedlichen Bezugspotentialen.

Nachteile:
- Höhere Kosten: Aufgrund zusätzlicher Komponenten wie Transformatoren.
- Größerer Platzbedarf: Die Isolationskomponenten benötigen mehr Raum.
- Geringere Effizienz: Durch Verluste in den Isolationskomponenten.

Die Polaritätsschutzschaltung umfasst einen positiven Versorgungsspannungspfad mit einer Eingangsseite für den Anschluss einer positiven Gleichspannung und einer Ausgangsseite für die Weitergabe der Gleichspannung an eine elektronische Baugruppe. Eine erste Schutzkomponente ist im positiven Versorgungsspannungspfad angeordnet und dient dazu, Strom in einer unbeabsichtigten Richtung bei einer Polaritätsumkehr zu blockieren.

Weiterhin umfasst die Polaritätsschutzschaltung einen negativen Versorgungsspannungspfad mit einer Eingangsseite für den Anschluss einer negativen Gleichspannung und einer Ausgangsseite für die Weitergabe der negativen Gleichspannung an die elektronische Baugruppe. Eine zweite Schutzkomponente ist im negativen Versorgungsspannungspfad angeordnet und dient ebenfalls dazu, Strom in einer unbeabsichtigten Richtung bei einer Polaritätsumkehr zu blockieren. Eine Überstromschutzschaltung ist im negativen Versorgungsspannungspfad hinter der zweiten Schutzkomponente angeordnet. Die Überstromschutzschaltung ist ausgestaltet, den negativen Versorgungsspannungspfad im Falle einer Überstrombedingung zu unterbrechen. Durch den Schutz sowohl des positiven als auch des negativen Versorgungsspannungspfades sowie die Integration einer Überstromschutzschaltung bietet die erfindungsgemäße Polaritätsschutzschaltung einen umfassenden Schutz gegen direkte und indirekte Verdrahtungsfehler in industriellen Gleichstromumgebungen. Die oben genannten Nachteile werden ebenfalls überwunden, die Kosten sind jetzt geringer, der Platzbedarf ist kleiner und die Effizienz ist größer, da keine Transformatoren eingesetzt werden müssen.

Die Polaritätsschutzschaltung umfasst mehrere Komponenten, die zusammenwirken, um einen umfassenden Schutz gegen Polaritätsumkehr und Überstrom zu gewährleisten. Eine erste Schutzkomponente ist im positiven Versorgungsspannungspfad angeordnet. Diese erste Schutzkomponente kann als P-Kanal-MOSFET ausgeführt sein. Eine zweite Schutzkomponente befindet sich im negativen Versorgungsspannungspfad und kann als N-Kanal-MOSFET realisiert werden. Beide Schutzkomponenten sind so ausgelegt, dass sie Ströme in unbeabsichtigter Richtung bei einer Polaritätsumkehr blockieren.

Im negativen Versorgungsspannungspfad ist zusätzlich eine Überstromschutzschaltung integriert. Überstromschutzschaltung umfasst ein Strommesselement und eine Messeinrichtung.

Das Strommesselement ermöglicht eine präzise Erfassung des fließenden Stroms. Die Messeinrichtung wertet die gemessenen Stromwerte aus und erkennt eine Überstrombedingungen. Bei Erkennung einer Überstrombedingung leitet die Messeinrichtung ein Freigabe-Signal an eine dritte Schutzkomponente weiter. Diese dritte Schutzkomponente, die ebenfalls als N-Kanal-MOSFET ausgeführt sein kann, unterbricht daraufhin den negativen Versorgungsspannungspfad.

Die Anordnung und Verschaltung der MOSFETs erfolgt entsprechend ihrem P-Kanal-Typ oder N-Kanal-Typ, um den erforderlichen Schutz zu erreichen. Die spezifische Anordnung der MOSFETs zueinander gewährleistet eine ordnungsgemäße Funktion der Schutz- und Strommessschaltungen, auch unter dem Einfluss von Eingangstransienten.

Ein Schwellenwert für die Überstromschutzschaltung kann bei 30 A festgelegt werden. Dieser Wert kann je nach Anwendungsfall und Anforderungen angepasst werden.

Die Kombination der ersten beiden Schutzkomponenten mit der Überstromschutzschaltung bietet einen umfassenden Schutz für die angeschlossene elektronische Baugruppe durch die Polaritätsschutzschaltung. Diese Schutzmaßnahmen sind besonders vorteilhaft in industriellen Umgebungen mit Gleichstromversorgungen im Bereich von 9V bis 48V, wo mehrere Geräte oder Automatisierungskomponenten parallel an einer Stromversorgung angeschlossen sein können.

Im Vergleich zu galvanisch isolierten Lösungen bietet die vorgestellte Schaltung eine kostengünstigere Alternative bei gleichzeitig hohem Schutzniveau. Sie benötigt weniger Platz auf der Leiterplatte und weist eine geringere Komplexität auf.

Die Verwendung von MOSFETs als Schutzkomponenten ermöglicht eine effiziente und zuverlässige Implementierung der Schutzfunktionen. Durch die geeignete Auswahl und Anordnung der MOSFET-Typen wird eine optimale Funktionalität auch unter Einfluss von Eingangstransienten sichergestellt.

Insgesamt bietet die Polaritätsschutzschaltung eine robuste und vielseitige Lösung für den Schutz von nicht-isolierten Stromversorgungen in industriellen Umgebungen. Sie adressiert typische Fehlerfälle und trägt zur Erhöhung der Betriebssicherheit und Zuverlässigkeit von Automatisierungskomponenten bei.

Die Polaritätsschutzschaltung kann in verschiedene Arten von Automatisierungskomponenten und industriellen Geräten integriert werden, nicht nur in die beschriebenen Beispiele.

Im Folgenden wird die Erfindung anhand der in den Figuren dargestellten Ausführungsbeispiele näher beschrieben und er-läutert. Es zeigen:
- FIG 1: ein Blockschaltbild einer Polaritätsschutzschaltung,
- FIG 2: eine Automatisierungskomponente,
- FIG 3: eine Blockschaltbild von zwei Geräten an einer Stromversorgung und
- FIG 4: ein Schaltplan.

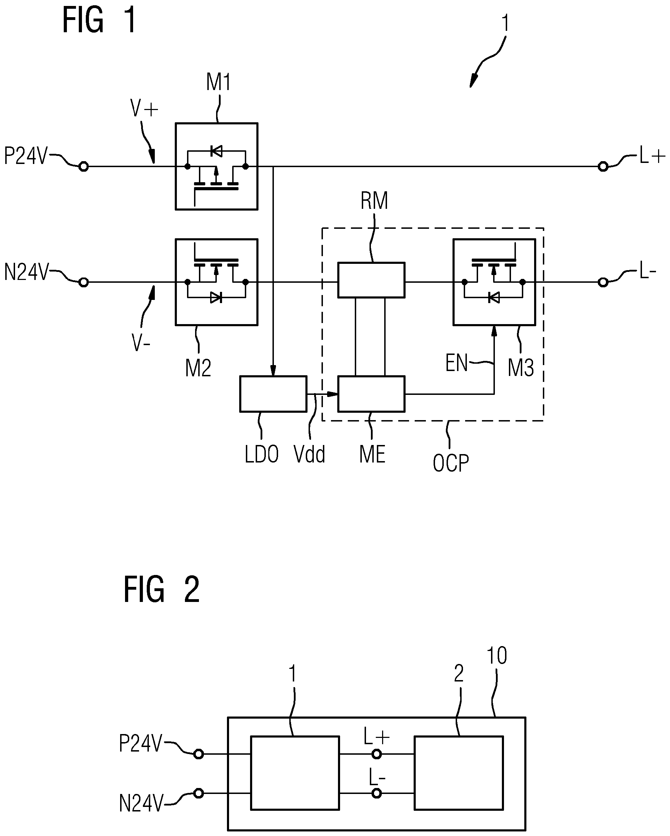

Gemäß FIG 1 ist eine Polaritätsschutzschaltung 1 dargestellt, wie sie beispielsweise in Automatisierungskomponenten 10 (siehe FIG 2) eingesetzt wird.

Erfindungsgemäß weist nun die Polaritätsschutzschaltung 1 in einem positiven Versorgungspfad V+ eine erste Schutzkomponente M1 und in einem negativen Versorgungspfad V- eine zweite Schutzkomponente M2 und eine dritte Schutzkomponente M3 auf. Die dritte Schutzkomponente M3 ist in einer Überstromschutzschaltung OCP untergebracht. Durch diese spezielle Anordnung der Schutzkomponenten M1,M2,M3 und die besondere Art der Verschaltung bezüglich ihrer Durchlassrichtung, können zu versorgende elektronische Baugruppen 2 geschützt werden, wenn z.B. die Versorgungsspannung verpolt angeschlossen wurde. Oder auch ein zweites zusätzliches Gerät parallel zu einem ersten Gerät betrieben wird und bei dem zweiten Gerät werden die Versorgungsspannungen vertauscht.

Die Überstromschutzschaltung OCP wird über einen Spannungsregler LDO mit einer Versorgungsspannung VDD für die Überstromschutzschaltung OCP versorgt. In der Überstromschutzschaltung OCP ist eine Messeinrichtung ME, ein Messwiderstand RM, welches das Strommesselement darstellt und eben die dritte Schutzkomponente M3 untergebracht.

Das Strommesselement bzw. der Messwiderstand RM ist üblicherweise als ein Shunt im Milliohmbereich ausgestaltet und liefert der Messeinrichtung ME einen Spannungswert, aus welchem der Strom zurückgerechnet werden kann. Sollte ein Überstrom festgestellt werden, so ist die Messeinrichtung ME dazu ausgestaltet, ein Freigabesignal EN zu generieren und den Stromfluss im negativen Versorgungsspannungspfad V- daraufhin zu unterbrechen.

Die erste Schutzkomponente M1 und die zweite Schutzkomponente M2 sind jeweils als MOSFET-Transistoren ausgestaltet, wobei die erste Schutzkomponente M1 als ein P-Kanal-MOSFET ausgestaltet ist und die zweite Schutzkomponente M2 als ein N-Kanal-MOSFET ausgestaltet ist. Die erste Schutzkomponente M1 und die zweite Schutzkomponente M2 sind in ihren Stromrichtungen gegensinnig angeordnet.

Die besondere Anordnung und Verschaltung der Schutzkomponenten M1,M2,M3 ermöglicht den besonderen Schutz für nichtisolierte Stromversorgungen. Darum sind die MOSFET's entsprechend ihren P-Kanal-Typ oder N-Kanal-Typ angeordnet bzw. verschaltet.

Gemäß FIG 2 ist eine Automatisierungskomponente 10 dargestellt, welche über eine positive Eingangsseite P24V und eine negative Eingangsseite N24V mit einer Gleichspannung versorgt wird. Zwischen den Eingangsseiten P24V,N24V und elektronische Baugruppe 2 ist die Polaritätsschutzschaltung 1 angeordnet. Die Polaritätsschutzschaltung 1 gibt an ihrer Ausgangsseite L+,L- die Gleichspannung an die elektronische Baugruppe 2 weiter. Durch die Vorschaltung der Polaritätsschutzschaltung 1 ist die elektronische Baugruppe 2 bei möglichen Kurzschlüssen oder einem Verpolen der Eingangsspannung bei anderen Baugruppen geschützt.

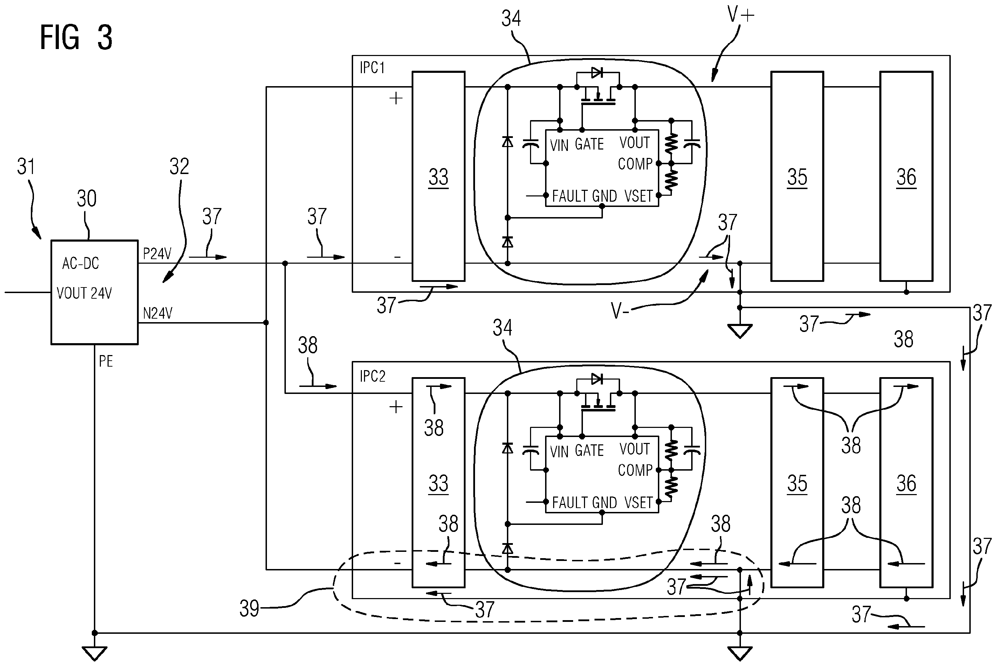

Gemäß der FIG 3 ist ein Blockdiagramm mit einem Netzteil 30 und einem ersten Industrie-PC IPC1 und einem zweiten Industrie-PC IPC2 dargestellt. Das Netzteil 30 erzeugt aus einer Wechselspannung 31 eine Gleichspannung 32 mit 24V an den Eingangsseiten P24V,N24V für die 24V-Gleichung für den ersten Industrie-PC IPC1 und den zweiten Industrie-PC IPC2.

Der erste Industrie-PC IPC1 ist mit seinen Eingängen für die 24V-Gleichspannung falsch angeschlossen worden. Der zweite Industrie-PC IPC2 ist mit seinen Eingängen +/- an der Gleichspannung 32 richtig angeschlossen worden. Durch das Verpolen der Gleichspannung 32 für den ersten Industrie-PC IPC1 fließt ein Fehlerstrom 37 in den ersten Industrie-PC IPC1. Da der zweite Industrie-PC IPC2 richtig angeschlossen ist, fließt in ihn ein Normalstrom 38. Der erste Industrie-PC IPC1 und der zweite Industrie-PC IPC2 sind identisch aufgebaut. In dem positiven Versorgungsspannungspfad V+ und in dem negativen Versorgungsspannungspfad V- ist ein EMI-Filter 33 angeordnet, dem folgt ein herkömmlicher Verpolschutz 34, dem folgt ein DC-DC-Wandler 35, welcher aus der 24V-Gleichspannung 32 eine 12V-Versorgungsspannung für ein Motherboard 36 bereitstellt.

Dadurch, dass diese Anordnung aus dem ersten Industrie-PC IPC1 und dem zweiten Industrie-PC IPC2 noch nicht die erfindungsgemäße Polaritätsschutzschaltung 1 aufweist, kommt es zu folgendem Fehlerszenario. In den ersten Industrie-PC IPC1 fließt der Fehlerstrom 37 über den negativen Versorgungspfad V- und da der erste Industrie-PC IPC1 geerdet ist, kann der Fehlerstrom 37 über Masse abfließen und auch über einen Massenanschluss des zweiten Industrie-PCs IPC2 in den negativen Versorgungsspannungspfad V- des zweiten Industrie-PCs IPC2 gelangen. Der zweite Industrie-PC IPC2 ist hingegen richtig angeschlossen und in ihn fließt normalerweise der Normalstrom 38 über den positiven Versorgungsspannungspfad V+ bis hin zum Motherboard 36 zurück in den negativen Versorgungsspannungspfad V-, aber an einer Stelle, wo der zweite Industrie-PC IPC2 auch mit Masse oder mit einer PE-Schutzerde verbunden ist, kann der Fehlerstrom 37 vom ersten Industrie-PC IPC 1 in den negativen Versorgungsspannungspfad V- des zweiten Industrie-PC IPC2 eindringen und in einem kritischen Bereich 39 überlagern sich nun der Fehlerstrom 37 und der Normalstrom 38, welches zu unzulässigen Stromwerten führen kann.

Im Fehlerfall ist demnach der erste Industrie-PC IPC1 falsch verdrahtet und dadurch fließt im zweiten Industrie-PC IPC2 zusätzlich der normale Betriebsstrom 38 im positiven Zweig und der Fehlerstrom 37, folglich ist der Negativzweig des zweiten Industrie-PC IPC2 überlastet und geht ohne unsere erfindungsgemäße Schaltung kaputt.

Im Gegensatz zu der Schaltung bezüglich des herkömmlichen Verpolschutzes 34 gemäß FIG 3 bietet die neuartige Polaritätsschutzschaltung 1 einen Verpolungsschutz für P24V,N24V und welcher zusätzlich im Falle einer Spannungsunterbrechung einen Rückstrom von einem Bulk-Kondensator blockiert. Die neue Polaritätsschutzschaltung 1 sorgt dafür, dass Fehlerströme in falscher Richtung blockiert werden. Die neue Polaritätsschutzschaltung 1 sorgt dafür, dass Überströme in korrekter Richtung verhindert werden, weil sich ein Fehlerstrom 37 zu einen Normalstrom 38 aufaddiert und somit Bauteilefehler hervorruft.

Dieses Blockdiagramm veranschaulicht nun die Unterschiede zwischen einer herkömmlichen Lösung mit einer herkömmlichen Verpolschutzschaltung 34 zu der mit der neuartigen Polaritätsschutzschaltung 1.

Erfindungsgemäß ist nun der positive Versorgungsspannungspfad V+ als auch der negative Versorgungsspannungspfad V- gegen Ströme in ungewollter Richtung im Falle einer direkten Verpolung geschützt. Der negative Versorgungsspannungspfad V- ist zusätzlich gegen externe/interne Verpolung durch eine Überstromschutzschaltung OCP geschützt, die den Stromkreis im Falle eines Überstromes unterbricht und die Komponenten der Stromversorgung vor Schäden bewahrt.

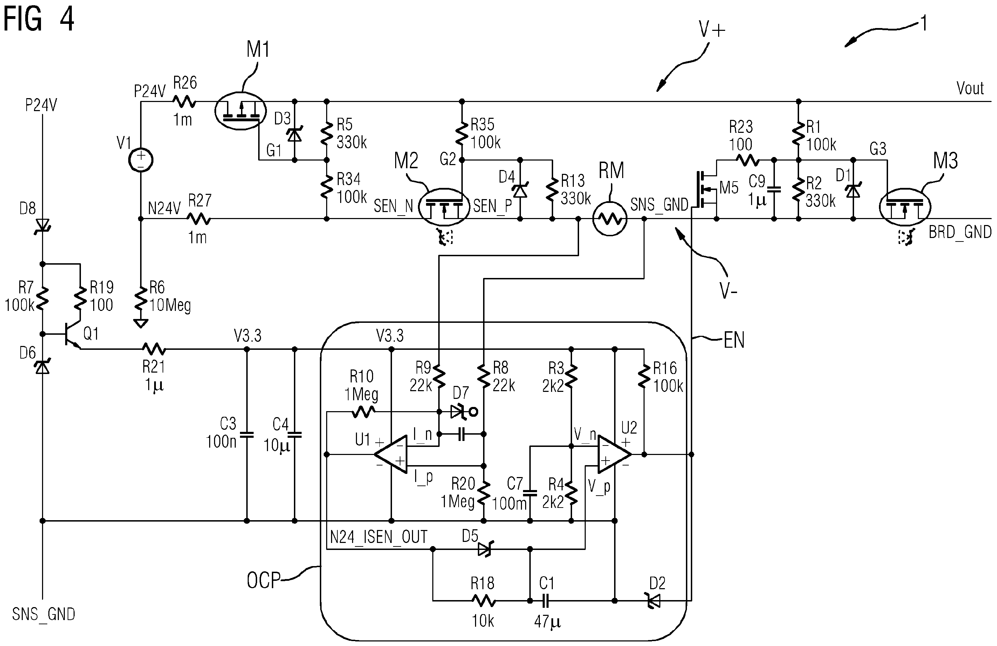

Gemäß FIG 4 ist ein detaillierter Schaltplan einer möglich zu realisierenden Polaritätsschutzschaltung 1 gezeigt. In der Polaritätsschutzschaltung 1 sind die wichtigsten Komponenten umkreist, das sind die erste Schutzkomponente M1, die zweite Schutzkomponente M2 und die dritte Schutzkomponente M3, jeweils als MOSFET-Transistoren ausgestaltet und zudem ist die Überstromschutzschaltung OCP eingezeichnet, welche über den Messwiderstand bzw. das Strommesselement RM den Fehlerstrom misst und schließlich über einen Ausgang ein Freigabesignal EN erzeugt, welches die dritte Schutzkomponente M3 auslöst.

## Patentansprüche

1. Polaritätsschutzschaltung (1) umfassend:
- einen positiven Versorgungsspannungspfad (V+) mit einer Eingangsseite (P24V) für den Anschluss einer positiven Gleichspannung (+24V) und einer Ausgangsseite (L+) für die Weitergabe der Gleichspannung an eine elektronische Baugruppe,
- einen negativen Versorgungsspannungspfad (V-) mit einer Eingangsseite (N24V) für den Anschluss einer negativen Gleichspannung (-24V) und einer Ausgangsseite (L-) für die Weitergabe der negativen Gleichspannung an die elektronische Baugruppe (MB),
- eine erste Schutzkomponente (M1), angeordnet im positiven Versorgungsspannungspfad (V+, und ausgestaltet, um Strom in einer unbeabsichtigten Richtung bei einer Polaritätsumkehr zu blockieren,
- eine zweite Schutzkomponente (M2), angeordnet im negativen Versorgungsspannungspfad (V-) und ausgestaltet, um Strom in einer unbeabsichtigten Richtung bei einer Polaritätsumkehr zu blockieren,
- eine Überstromschutzschaltung (OCP), angeordnet im negativen Versorgungsspannungspfad (V-) hinter der zweiten Schutzkomponente (M2), und ausgestaltet den negativen Versorgungsspannungspfad (V-) im Falle einer Überstrombedingung zu unterbrechen.

2. Polaritätsschutzschaltung (1) nach Anspruch 1, wobei die erste und zweite Schutzkomponente (M1,M2) einen MOSFET aufweisen.

3. Polaritätsschutzschaltung (1) nach Anspruch 2, wobei die erste Schutzkomponente (M1) einen P-Kanal-MOSFET und zweite Schutzkomponente (M2) einen N-Kanal-MOSFET aufweisen.

4. Polaritätsschutzschaltung (1) nach einem der Ansprüche 1 bis 3, wobei die Überstromschutzschaltung (OCP) ein Strommesseelement (RM) und eine Messeinrichtung (ME) umfasst, welche ausgestaltet ist eine Überstrombedingungen zu erkennen und ein Freigabe-Signal (EN) an eine dritte Schutzkomponente (M3), zum Unterbrechen des negativen Versorgungsspannungspfad (V-), weiterzuleiten.

5. Polaritätsschutzschaltung (1) nach einem der Ansprüche 1 bis 4, wobei die MOSFETs entsprechend ihrem P-Kanal-Typ oder N-Kanal-Typ angeordnet bzw. verschaltet sind, um den erforderlichen Schutz zu erreichen.

6. Polaritätsschutzschaltung (1) nach einem der Anspruch 4 oder 5, wobei die dritte Schutzkomponente (M3) einen N-Kanal-MOSFET aufweist.

7. Automatisierungskomponente (10) mit einer elektronische Baugruppe (2), welche zur Gleichstromversorgung eine Polaritätsschutzschaltung (1) nach einem der Ansprüche 1 bis 6 aufweist.

8. Verwendung der Polaritätsschutzschaltung (1) nach einem der Ansprüche 1 bis 6 in einer industriellen Umgebung mit einer Gleichstromversorgung im Bereich von 9V bis 48V.

9. Verwendung nach Anspruch 8, wobei die industrielle Umgebung mehrere Geräte und/oder Automatisierungskomponenten (10) umfasst, die parallel an einer Stromversorgung angeschlossen sind.
